# EUROPEAN PATENT APPLICATION

(11) **EP 1 566 931 A1**
(43) Date of publication of application: **24.08.2005**
(21) Application number: 04394008.9
(22) Date of filing: 19.02.2004
(51) Int. Cl.: H04L 12/58

(54) **Content management system**

(71) Applicant: Openmind Networks Limited, Dublin 2 (IE)
(72) Inventor: Kelly, Brian, Bray, Co. Wicklow (IE)
(74) Representative: Curley, Donnacha John

(57) **Abstract**

The present invention relates to the sending and receiving of multimedia messages in a mobile telecommunication network and in particular provides a system and method that can manage content in a mobile media environment so as to monitor the flow of multimedia content in MMS messages. This is achieved by providing a content management system for use with a multimedia messaging system of a telephone network. Wherein the multimedia messaging system being adapted to enable a transportation of messages of the type including messages having a multimedia message content. The system comprises a signature generator for calculating at least one signature for the contents of individual messages, and monitoring means for monitoring message content traffic using the at least one calculated signature of individual messages.

## Description

### Field of the Invention

The present invention relates to the field of mobile telephony and in particular to the sending and receiving of multimedia messages in a mobile telecommunication network.

### Background Of The Invention

Data messaging using mobile phones has become an extremely popular method of communication. Initially, messaging simply involved the sending of text messages using short message services (SMS). More recently, the introduction of multimedia message services (MMS) using the Wireless Applications Protocol (WAP) have enabled users to send other users multimedia messages, i.e. still images, audio clips, video clips etc.

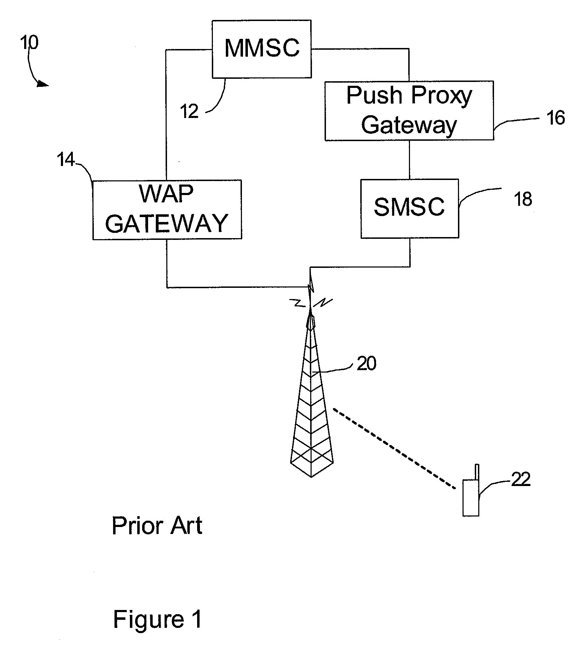

A simplified block diagram of a typical MMS network arrangement is shown in Figure 1. In brief the arrangement provides for the delivery of MMS's from a source, e.g. another user's mobile device or an application associated with the mobile network, through a multimedia message switching centre (MMSC) 12 to a user's mobile device via a WAP gateway 14. Whereas SMS messages are sent via a Push Proxy Gateway 16 and an SMSC 18. In certain arrangements, the functionaility of the Push Proxy Gateway 16 and the SMSC may be incorporated within the MMSC.

Some exemplary methods of message origination and delivery (effectively the message lifecycle) will now be described, in particular where MMS messages originate from another user's mobile device or an application associated with the mobile network.

In the case, where the message originates from a user's mobile device and sent to another user's mobile device (referred to commonly as a Mobile Originated to Mobile Terminated (MO/MT) message), the process commences a user preparing a multimedia message on their telephone, including providing message content and a destination. The telephone then submits this message to the MMSC associated with the user's telephone (e.g. as identified in the settings of telephone) via the WAP Gateway. Upon receipt of the message, the MMSC sends a notification (as an SMS message) to the recipient telephone via a Push Proxy Gateway 16 and a Short Messaging Switching Centre 18. The recipient telephone retrieves the message from the MMSC 12 via the WAP Gateway 14.

An alternative method of message delivery is where the message originates from an application connected to the MMSC, which is referred to generally as Application Originated to Mobile Terminated (AO/MT). In this case, an application, (for example a news organisation or sports results organisation) submits a message to the MMSC via a suitable (e.g. MM7) Interface. As in the previous method, the MMSC sends a notification as an SMS message to the recipient handset via the Push Proxy Gateway and the SMSC, whereupon the recipient telephone is able to retrieve the message from the MMSC via the WAP Gateway. It will be appreciated that in both scenarios, all multimedia content is transmitted through the WAP Gateway to/from the telephone handsets. As the messages are transmitted through the WAP gateway, the network operators have effectively no control over the content and delivery of MMS's.

With the increased popularity of these multimedia messages, a number of problems have been identified with the usage of these messages and in particular the inability of network operators to control users sending other users inappropriate content messages, for example child pornography images.

CONTENT GAURDIAN™ (supplied by Telcotec of Blackrock, Co Dublin, Ireland) is a product that purports to protect mobile telephones from the delivery from adult, inappropriate or unsolicited content by providing a filter between the WAP gateway and the Gateway GPRS Support Node (GGSN). It is not clear from the public information available as to how this is achieved. Nonetheless, it will be readily appreciated by those skilled in the art that filtering based on content is not a straightforward or reliable method of restricting content, for example it is difficult for computer software to distinguish a pornographic image and a family photo. Accordingly, there are clear limitations in the current approaches to limiting access to MMS messages.

There is therefore a need to provide a system and method that can manage content in a mobile media environment.

### Summary Of The Invention

The inventor of the present invention has realised that the primary problem with the prior art is that they seek to identify inappropriate content, the systems are not able to identify individual items of content or the origin and destination of these individual items of content. The inventor of the present invention has further realised that uniquely identifying content items is the solution to this problem.
Accordingly, a first embodiment of the invention provides a content management system for use with a multimedia messaging system of a telephone network, the multimedia messaging system being adapted to enable a transportation of messages of the type including messages having a multimedia message content. The system comprises a signature generator for calculating at least one signature for the contents of individual messages, and monitoring means for monitoring message content traffic using the at least one calculated signature of individual messages.
Typically, the system may act as a proxy device, which in use is located between a WAP gateway and an MMSC such that information flowing between the WAP gateway and the MMSC passes through said proxy.
In one implementation, the system may be implemented within a WAP gateway. In another, the system is implemented within an MMSC.
Suitably, the signature generator uses a signature calculation algorithm selected to provide statistically unique signatures for individual message content. An advantageous selection is the MD5 algorithm.
The monitoring means may be adapted to store calculated signatures of individual messages along with message details in an associated database.
These message details may comprise one or more of the following:
sender ID, recipient ID, Time and Date.
The monitoring means may be adapted to store the message contents along with the calculated signature in an associated database upon detection of the first occurrence of a calculated signature.

The monitoring means may act as a filter of message by comparing the one or more calculated signatures for each message with one or more signatures stored on a list of proscribed signatures. In which case, the monitoring means may intercept messages having contents with a matching signature to the list of proscribed signatures. The monitoring means may be adapted to perform one of the following steps when a message is intercepted having contents with a matching signature to the list of proscribed signatures;
a) Store details of the intercepted message,
b) Insert replacement content into the message,
c) Send another message to the message recipient,
d) Send a message to the sender, and
e) Alert the network operator.

The list of proscribed signatures may identify message content of an illegal nature. In addition or alternatively, the list of proscribed signatures identifies proprietary message content, which users are not allowed to forward to other users.
The content management system may further comprise an analysis means for performing analysis of the calculated signatures of individual messages and related message details and aggregating said analysis in a report for the network operator.

Another embodiment of the invention provides a method of controlling multimedia message flow in a multimedia messaging system of a telephone network, the multimedia messaging system being adapted to send and\or receive messages of the type comprising multimedia message content. This method comprises the steps of: receiving a message having one or more items of multimedia content, calculating a signature specific to the items of multimedia content, and controlling message flow using said calculated signatures. The step of calculating a signature may use a signature calculation algorithm selected to provide statistically unique signatures for individual message content. An advantageous selection of algorithm would be the MD5 algorithm.
The method may further comprise the step of storing calculated signatures of individual messages along with message details. These message details may comprise one or more of the following: sender ID, recipient ID, Time and Date.
The method may further comprise the step of storing message contents along with the calculated signature upon detection of the first occurrence of a calculated signature.
The method may further comprise the step of comparing calculated signatures for a match with proscribed signatures and halting the onward progress of message content where a match occurs. In such cases, the method comprise the additional steps of one or more of the following;
a) Store details of the halted message,
b) Insert replacement content into the message,
c) Send another message to the message recipient,
d) Send a message to the sender, and
e) Alert the network operator.
The proscribed signatures may identify message content of an illegal nature and/or message content of a proprietary message content which users are not permitted to forward to other users.
The method may provide for the performance of an analysis of the calculated signatures of individual messages and related message details and aggregating said analysis in a report for the network operator.

The invention also extends to a computer program which when run on a computer is adapted to carry out the methods of the invention described above.

### Brief Description Of The Drawings

The present invention will now be described with reference to the accompanying drawings in which:
Figure 1 is a block diagram representation of a prior art messaging system of a mobile telephone network,
Figure 2 is a representation of the inventive system incorporated in an exemplary mode in the system of Figure 1,
Figure 3 is a block diagram of an exemplary system according to the invention,
Figure 4 is a flow chart representing an exemplary method of operation of the inventive system, and
Figure 5 is a flow chart of a further exemplary method of operation.

### Detailed Description Of The Drawings

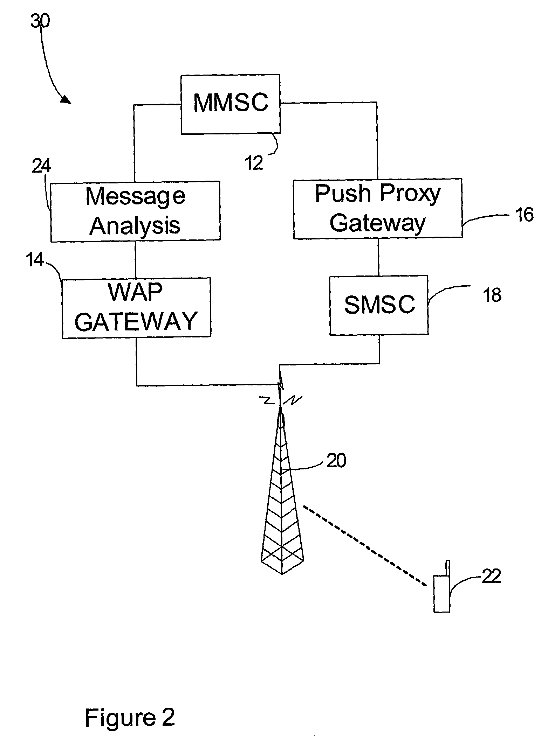

The present invention will now be described with reference to Figures 2 to 5.

As shown in Figure 2, which is a simplified block diagram of a typical MMS network arrangement 30 in accordance with the invention, the present invention provides for an incorporation of a message analysis engine 24 within the network architecture of the mobile network. In brief, the arrangement 30 provides for the delivery of MMS's from a source, e.g. another user's mobile device or an application associated with the mobile network, through a multimedia message switching centre (MMSC) 12 to a user's mobile device 22 via a WAP gateway 14 and transmitter network 20 in substantially the same way as previously described with reference to Figure 1. The message analysis engine 24 of the content management system of the present invention is provided as a proxy device between the MMSC and the WAP gateway. The message analysis engine is adapted to analyse messages as they pass between the MMSC and the WAP Gateway. In this respect, it will be understood that the message analysis engine may be configured to study messages as they pass from the WAP gateway to the MMSC and/or from the MMSC to the WAP gateway.

Advantageously, the content management system is provided as a separate stand-alone entity, as this effectively provides a method of inclusion in existing messaging systems without having to make significant software\hardware changes. Nonetheless, the functionality of the content management system may be incorporated into any device along the multimedia message transmission path including the MMSC and the WAP gateway.

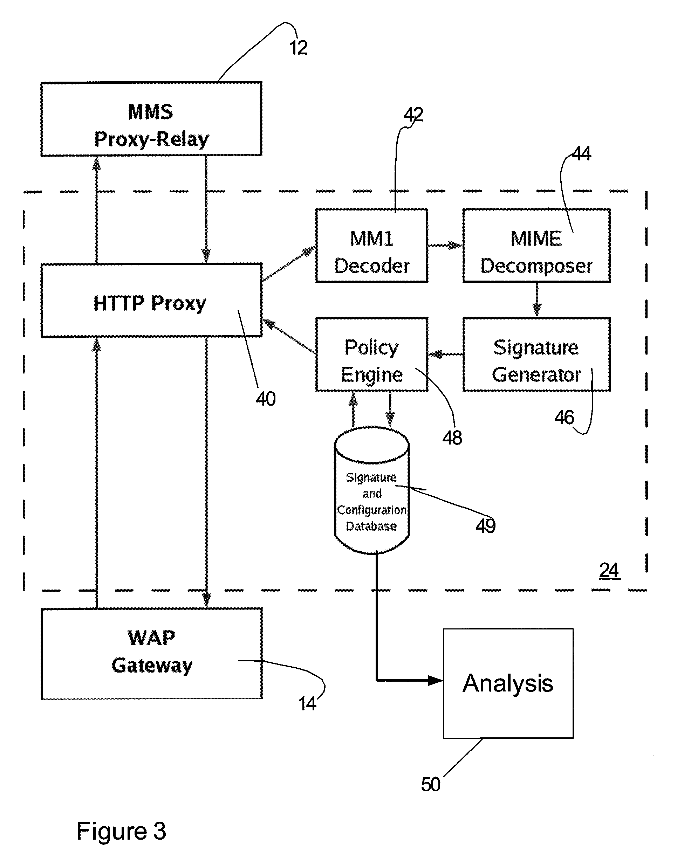

The message analysis engine of the content management system effectively acts as a node in the transmission path, in which an analysis may be performed on the contents of messages. More particularly, a signature is calculated for the contents of a message. This signature, once calculated, may be used in a variety of ways to monitor messages, including but not limited to the blocking of identified inappropriate messages. These will be explained with reference to the exemplary embodiment of the message analysis engine shown in Figure 3, in which a message analysis engine is shown positioned between a WAP gateway and an MMSC (also referred to as a MMS Proxy-Relay).

The message analysis engine 24 is advantageously provided as a HTTP proxy device 40 that is inserted between the MMSC 12 and the WAP gateway 14. The proxy device is configured such that it appears as a WAP gateway to the MMSC and as an MMSC relay to the WAP gateway so as to effectively permit the seamless transmission of messages between the MMS-Proxy relay (MMSC) and WAP gateway. The proxy can also act as a message filter.

The message analysis engine includes a decoder 42, typically of the type known as a MM1 Decoder. The MM1 decoder decodes the WAP (MM1) formatted binary encoded messages. Such decoders are commonplace in the field of MMS over WAP, full details of how an exemplary MM1 decoder may be implemented by one skilled in the art are described in WAP Forum documents which may be optained from Open Mobile Alliance web site (http://www.openmobilealliance.org/tech/affiliates/wap/wapindex.html) for example in WAP209 in conjunction with WAP230, the complete details of which are herein incorporated by reference.

Once decoded, the messages generally conform to the existing Internet mail message formats, i.e. MIME (Multipurpose Internet Mail Extensions) formatted multipart messages details of which may found in request for comment documents provided by the The Internet Engineering Task Force and which may be obtained from their web site http://www.ietf.org, and in particular rfc2045 http://www.ietf.org/rfc/rfc2045.txt, the entire contents of which are incorporated herein by reference. The decoded messages are passed to a substantially conventional MIME decomposer 44. The decomposer in the message analysis engine extracts multimedia contents, e.g. images, audio clips, video clips, from the decoded MIME messages supplied by the MM1 decoder. The extracted multimedia contents are forwarded to a signature generator 46.

The signature generator calculates signatures for the multimedia messages contents. The signatures generator uses a combination of one or more signature generation algorithms to calculate the signatures of the message contents, in a manner that will be apparent to those skilled in the art of signature generation. The one or more signature generation algorithms are suitably selected so that the signatures generated are substantially uniquely attributable to the contents from which they were generated.

An exemplary algorithm suitable for creating the signature is the MD5 algorithm (complete details of which are available in the following on-line document http://www.ietf.org/rfc/rfc1321.txt, the contents of which are incorporated herein by reference). The advantages of the MD5 algorithm over other signature generation algorithms is that is designed to be fast on 32-bit computing machines, it does not require any large substitution tables and may be coded quite compactly. Additionally, because of its robust nature and the size of the signature generated (128 bits), the signature may be assumed to be statistically unique, such that given any two pieces of content, comparison of their MD5 signatures is sufficient to establish if the two pieces of content are identical. Other exemplary signature techniques that could be used would include cyclic redundancy check algorithms.

Although, signature analysis of the individual multimedia contents will suffice for detection of most images, skilled persons in the field may make minor alterations to a piece of multimedia content resulting in a different signature, for example by altering the colour of a single pixel in an image.
The system may readily be modified to address this problem by providing for the creation of one (or possibly several) partial signatures, with each of the partial signatures representing a portion of the content which may be used for signature comparison with corresponding stored partial signatures.

Another technique which may be used is to apply a series of transforms to the content prior to calculating the signatures. One such transform could be the resizing of content (particularly suited to images) to a standard size. Another transform suitable for images would be the conversion of the image to a reduced colour image (e.g. a grey scale or black and white image). A combination of transforms may be used prior to the calculation of signatures. A perceived disadvantage of this approach is however that it may lead to false positives (i.e. where a piece of content is incorrectly identified)

It will be appreciated, however, by those skilled in the art that a variety of signature generation algorithms may be used as long as the resulting signatures are statistically substantially unique to provide some certainty concerning the identity of message contents. Although, it would be possible to store the message contents themselves and perform a direct comparison of message contents, it would require significantly higher storage capacity and create an unrealistic computational load. A signature which is associated with a specific message content is of a significantly smaller size than the actual message and can be more readily stored.

The engine analysis engine further comprises a policy engine 48. The policy engine analyses the calculated signatures using one or more policies set by a system administrator. A related database 49 is provided for the storage of the set policies implemented by the policy engine and/or the generated signatures. An analysis module 50 may be provided to interact with the database 49 and to provide the network operator with details on message traffic and filtering.

The exact manner of operation and the interoperation of the various components of the message analysis engine will now be explained with reference to some exemplary methods of operation.

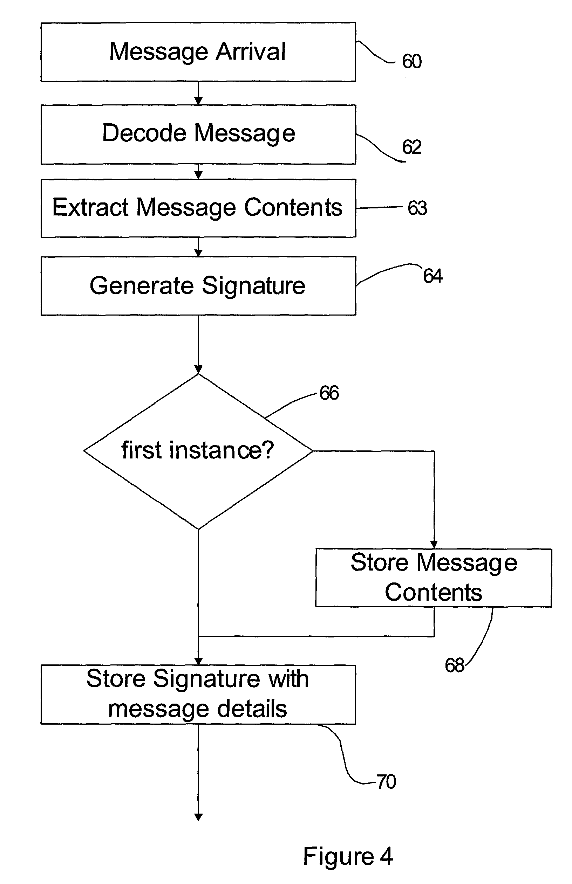

Recent news reports in Ireland concerning the distribution of a purported pornographic image of a schoolgirl have highlighted a deficiency in existing messaging systems, whereby network operators were effectively unable to identify the origin or track the dissemination of the image over mobile telephones. The first exemplary method of operation, illustrated in the flowchart of Figure 4, provides a solution to this problem.

The method commences with the arrival 60 of a message at the HTTP proxy 40 of the message analysis engine 24. It will be appreciated by those skilled in the art that the message may be on the way from the WAP gateway 14 to the MMSC 12 or from the MMSC to the WAP gateway. The MM1 decoder 42 decodes 62 the message (or a copy thereof). The decoded message is then passed to the MIME decomposer 44, which extracts 63 the multimedia contents from the body of the message. The signature generator 46 then calculates 64 a signature for the multimedia contents in the message. The Signature Generator or MIME decomposer may be configured to selectively ignore certain multimedia content, e.g. a text file or sound file may be ignored, with the Signature Generator only calculating signatures for video and/or image files. In circumstances, where there is more than one item of multimedia content in a message, the signature generator may calculate more than one signature.

Upon receipt of the calculated signatures, the policy engine 48 stores 70 the calculated signatures along with message details (for example an identifier of the sender and/or recipient of the message in the signature database 49). It will be appreciated by those skilled in the art that information identifying the sender and recipient of a message is generally available directly from the message or is derivable from the message. For example, if when passing a message on, the WAP gateway has not populated the message with the sender's identity, the sender's IP address may be compared with entries in the radius database (a database of temporary assigned IP addresses to mobile phone users) to identify the sender. The policy engine may also store other information in the database, for example the date and time of transmission\receipt. Advantageously, the signature engine may also be configured to store a copy of the multimedia message contents for which the signatures have been generated, for future reference and/or analysis. To reduce storage requirements, the signature engine may perform an initial search 66 on the database to determine whether a given signature has previously been stored on the database (and hence the multimedia contents) and only store 68 the multimedia contents in cases where it is the first instance of the signature in the database.

It will be appreciated that having a stored record of the signatures of the contents of a multimedia message allows a network operator and/or a law enforcement agency or other authorised third party to identify and track the senders and\or recipients of identified content, as, once the content is known, its signature may be calculated and a search performed on the database for that signature.

Moreover, by analysing the records stored in the database, for example by reviewing a list of content signatures for content that is transported in the network over a specific time period, the network operator has the ability to identify popular content and to be alerted if something out of the ordinary is occurring. In this regard the analysis may contain software which is configured to provide the network operator with reports detailing this information on demand.

The system may also be used as a filter to prevent the transmission of messages, which have been previously identified as forbidden for transport within the network (inappropriate content). In this scenario, the system maintains a list of signatures for contents previously identified as forbidden for transport within the network. As signatures are calculated for message contents, the policy engine compares them to the list of forbidden signatures. Where a match is found, the policy engine stops the onward transmission of the content. Additionally, the policy engine may respond to an identification of a forbidden signature by performing, for example, one or more of the following actions;
1. Store details of the stopped message, including the contents, sender/recipient identity etc.
2. Insert replacement content into the message, wherein the replacement content informs the message recipient that the message contents have been stopped.
3. Send an MMS/SMS message to the message recipient that the message contents have been stopped.
4. Send an MMS/SMS message to the message sender that the message contents have been stopped.
5. Send an alert to the network operator that message contents have been stopped.

Such types of interaction with intercepted messages will be well known to those parties familiar with the use of virus protection software on email exchanges and networks, albeit implemented in a considerably different fashion.

In addition to the problem associated with network traffic of media content of a purported deviant nature, the present invention has additional applications in other aspects of media traffic. For example, network operators are generating considerable revenue from value added services\content which they offer to their customers, e.g. ring tones, screen logos, games, and the distribution of specific material like sports results, news reports, etc. Networks typically charge an individual fee for each item sent to a user, these individual fees are typically higher than the cost for a user to forward the item on to another user. Thus each time a user forwards a message with this content, the network is operating at a reduced margin.

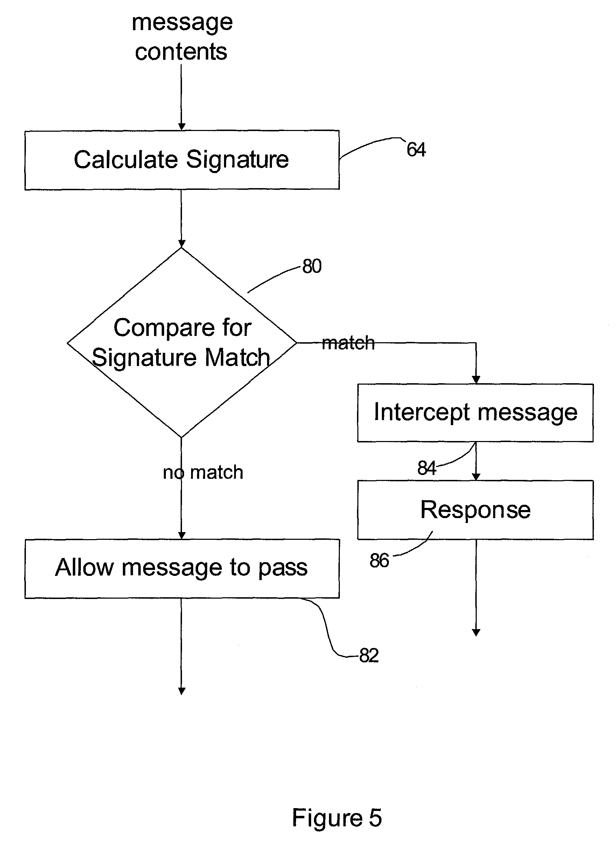

The present invention may be used to address this problem by filtering out the unauthorised forwarding of content previously identified as such content. In this scenario, an exemplary method for which is shown in Figure 5, the system maintains a list of signatures for contents previously identified as forbidden for forwarding by users within the network. As signatures are calculated 64 for the extracted message contents (as previously described), the policy engine compares 80 them to the list of forward-forbidden signatures. Where a match is found the message is intercepted 84. In the absence of a match the message is allowed to pass 82. In this context, it will be appreciated that the term allowed to pass may mean actively forwarding the message to the WAP gateway/MMSC whereas interception may mean not doing so. It will be appreciated that as Network Operator originating content is likely to be passed directly to the MMSC along the MM7 network, it is unlikely to be sent (by an authorised source) through the WAP gateway to the MMSC and thus any incoming messages to the MMSC from the WAP gateway containing contents with a forward-forbidden signature may be stopped without determination of whether the sender is a permitted source, i.e. all mobile phone users are presumed not to be authorised. Alternatively, the policy engine may be configured to perform a search to determine whether the message originated from an authorised source, e.g. in cases where the messages are not transmitted to the MMSC through an MM7 network or similar arrangement. Additionally, the policy engine may respond 86 to an identification of a forward-forbidden signature by performing, for example, one or more of the following actions;
1. Store details of the stopped message, including the contents, sender/recipient identity etc.
2. Insert replacement content into the message, for example informing the recipient that the message contents have been stopped.
3. Send an MMS/SMS message to the message recipient that the message contents have been stopped.
4. Send an MMS/SMS message to the message sender that the message contents have been stopped.
5. Send an alert to the network operator that message contents have been stopped.

It will be appreciated that in certain jurisdictions, it may not be possible for legal reasons for network operators to store copies of message contents. Another possible application which the signature generation method of the present invention provides is for conducting an analysis on the success or otherwise of viral marketing campaigns. A viral marketing campaign (in the context of MMS messaging) is where a network operator or another user, sends a marketing message to one or more users, who in turn because of the nature of its contents forward it on to other users, who in turn themselves forward it on. It would be of clear benefit to the operators of such viral marketing messages to determine the rate and extent with which their messages have spread. The policy engine of the present invention may be readily adapted to provide for this by storing the initial signature of a viral message and then searching subsequently for matching signatures. As matching signatures are detected, the details may be stored for subsequent processing into a marketing report. For example, the number of matching signatures could be presented in a graph indicating the number of times the viral message was forwarded in the first hour, second hour etc of the campaign.

The ability to monitor the spread of a viral marketing campaign also provides the marketing manager with an opportunity to increase the likelihood of success of their viral marketing campaigns by creating an incentive for customers who take part in the marketing campaign and forward the message on to other users. This incentive may for example be implemented as a competition with each the policy engine (or an associated system) being adapted to pick (randomly or at fixed intervals) users who have forwarded the viral marketing message (as identified by the signature) and notify them of a prize etc.

Although, the present invention has been described in terms of several distinct modules, it will be appreciated that the entire content management system is suitable for implementation within a single computing device with the individual modules implemented in software. For example, the system may readily be implemented in a server (e.g. a UNIX server), having a IP connection for communication with the WAP gateway and MMSC. In which case, the functionaility of the individual blocks of the analysis engine written in software code.

The words comprises/comprising when used in this specification are to specify the presence of stated features, integers, steps or components but does not preclude the presence or addition of one or more other features, integers , steps, components or groups thereof.

## Claims

1. A content management system for use with a multimedia messaging system of a telephone network, the multimedia messaging system being adapted to enable a transportation of messages of the type including messages having a multimedia message content, the system comprising:
a signature generator for calculating at least one signature for the contents of individual messages, and
monitoring means for monitoring message content traffic using the at least one calculated signature of individual messages.

2. A content management system according to claim 1, wherein said system acts as a proxy device, which in use is located between a WAP gateway and an MMSC such that information flowing between the WAP gateway and the MMSC passes through said proxy.

3. A content management system according to claim 1, wherein the signature generator uses a signature calculation algorithm selected to provide statistically unique signatures for individual message content.

4. A content management system according to claim 1, wherein the monitoring means is adapted to store calculated signatures of individual messages along with message details in an associated database.

5. A content management system according to claim 3, wherein said monitoring means is adapted to store the message contents along with the calculated signature in an associated database upon detection of the first occurrence of a calculated signature.

6. A method of controlling multimedia message flow in a multimedia messaging system of a telephone network, the multimedia messaging system being adapted to send and\or receive messages of the type comprising multimedia message content the method comprising the steps of:
receiving a message having one or more items of multimedia content, calculating a signature specific to the items of multimedia content, and
controlling message flow using said calculated signatures.

7. A method according to claim 6, further comprising the step of storing calculated signatures of individual messages along with message details, the message details comprising one or more of the following:
sender ID, recipient ID, Time and Date.

8. A method according to claim 6, further comprising the step of comparing calculated signatures for a match with proscribed signatures and halting the onward progress of messages where a match occurs.

9. A method according to claim 8, wherein upon detection of match performing one or more of the following steps;
a) Store details of the halted message,
b) Insert replacement content into the message,
c) Send another message to the message recipient,
d) Send a message to the sender, and
e) Alert the network operator.

10. A method according to any of claims 6 to 9, further comprising the step of performing analysis of the calculated signatures of individual messages and related message details and aggregating said analysis in a report for the network operator.
